# FASCICULE DE BREVET EUROPEEN

(11) **EP 3 448 665 B1**
(45) Date de publication et mention de la délivrance du brevet: **11.03.2020**
(21) Numéro de dépôt: 17725685.6
(22) Date de dépôt: 28.04.2017
(51) Int. Cl.: B29C 70/88, B29C 70/52, G02B 6/44, H01B 11/22, B29C 70/86, B29C 48/00

(54) **DISPOSITIF ET PROCÉDÉ POUR LA FABRICATION D'UNE PIÈCE EN MATÉRIAU COMPOSITE INCORPORANT AU MOINS UNE FIBRE OPTIQUE**
VORRICHTUNG UND VERFAHREN ZUR HERSTELLUNG EINES FASERVERBUNDTEILS WELCHES EINE OPTISCHE FASER UMSCHLIESST
APPARATUS AND METHOD FOR MANUFACTURING A COMPOSITE PART INCLOSING AN OPTICAL FIBRE

(30) Priorité: 29.04.2016 FR 1653874
(43) Date de publication de la demande: 06.03.2019
(73) Titulaire: Structil, 91710 Vert Le Petit (FR)
(72) Inventeur: VIALE, Jérémy, 44830 Bouaye (FR); COROMINAS, Eric, 91100 Corbeil-Essonnes (FR)
(74) Mandataire: Pols, Ronald Maarten
(86) Numéro de dépôt international: PCT/FR2017/051013
(87) Numéro de publication internationale: WO 2017/187100

(56) Documents cités:
- EP-A2- 0 461 871
- DE-A1- 2 628 393
- US-B1- 6 343 172

## Description

### Arrière-plan de l'invention

L'invention concerne une installation pour la fabrication d'une pièce en matériau composite comprenant au moins une fibre optique et un procédé de fabrication d'une telle pièce mettant en œuvre cette installation.

Des pièces comprenant au moins une fibre optique enrobée dans une structure composite sont mises en œuvre dans divers domaines comme l'exploration minière ou pétrolière. Il est toutefois difficile, avec les techniques de production actuelles, de maintenir précisément la fibre optique à la même position dans la section de la pièce sur toute la longueur de celle-ci. Cette problématique revêt une importance toute particulière dans les applications précitées où les pièces mises en œuvre présentent une grande longueur, typiquement de l'ordre de plusieurs centaines de mètres.

EP 0 461 871 divulgue une installation pour la fabrication d'une pièce en matériau composite incorporant une fibre optique.

Il existe donc un besoin pour disposer d'une installation pour la fabrication d'une pièce incorporant au moins une fibre optique et permettant de contrôler précisément le positionnement de la fibre optique sur toute la longueur de la pièce fabriquée.

### Objet et résumé de l'invention

A cet effet, l'invention propose, selon un premier aspect, une installation pour la fabrication d'une pièce en matériau composite conformément à la revendication 1.

L'installation est configurée pour produire la pièce par une technique de pultrusion dans laquelle les fibres de renfort imprégnées de résine sont destinées à former, après passage dans la filière de pultrusion, une structure en matériau composite enrobant chaque fibre optique. Le fait que le dispositif de traction soit configuré pour tirer les fibres de renfort imprégnées autour de l'élément de positionnement permet d'obtenir cette structure composite enrobant chaque fibre optique après passage dans la filière de pultrusion. L'invention met en œuvre un élément de positionnement qui présente au moins une ouverture de guidage maintenue dans une position prédéterminée par rapport à l'entrée de la filière. Cette ouverture de guidage est destinée à être traversée par la fibre optique et permet d'assurer que cette dernière pénètre dans la filière de pultrusion avec une position qui est contrôlée et maintenue fixe tout au long de la fabrication de la pièce. En maintenant le bon positionnement de la fibre optique juste avant son entrée dans la filière de pultrusion, l'installation selon l'invention permet d'éviter que la position de la fibre optique dans la section de la pièce obtenue ne varie significativement le long de la longueur de cette dernière.

L'élément de positionnement comprend une première portion et au moins une deuxième portion s'étendant depuis la première portion, l'ouverture de guidage étant présente sur la deuxième portion et le dispositif de traction étant en outre être configuré pour tirer les fibres de renfort en les faisant passer de chaque côté de ladite deuxième portion.

En particulier, l'élément de positionnement peut comprendre au moins deux deuxièmes portions s'étendant chacune depuis la première portion, chacune des deuxièmes portions pouvant présenter au moins une ouverture de guidage, et le deuxième dispositif d'alimentation pouvant comprendre une pluralité de fibres de optiques, le dispositif de traction pouvant être configuré pour tirer chacune des fibres optiques depuis le deuxième dispositif d'alimentation au travers d'une ouverture de guidage distincte et de la filière de pultrusion, et le dispositif de traction pouvant en outre être configuré pour tirer les fibres de renfort en les faisant passer de chaque côté de chacune des desdites deuxièmes portions. Un tel exemple de réalisation est adapté à la formation d'une pièce en matériau composite présentant une pluralité de fibres optiques. On pourrait en particulier avoir un élément de positionnement qui présenterait au moins trois, voire au moins quatre, deuxièmes portions comme il vient d'être décrit, selon le nombre de fibres optiques souhaité pour la pièce à obtenir.

Dans ce cas, la filière de pultrusion peut s'étendre le long d'un axe longitudinal, le deuxième dispositif d'alimentation pouvant comprendre une pluralité de fibres optiques, et l'élément de positionnement pouvant comprendre une pluralité de deuxièmes portions s'étendant chacune depuis la première portion transversalement par rapport à l'axe longitudinal de la filière, chacune des deuxièmes portions pouvant présenter au moins une ouverture de guidage, le dispositif de traction pouvant être configuré pour tirer chacune des fibres optiques depuis le deuxième dispositif d'alimentation au travers d'une ouverture de guidage distincte et de la filière de pultrusion, le dispositif de traction pouvant en outre être configuré pour tirer les fibres de renfort en les faisant passer de chaque côté de chacune desdites deuxièmes portions.

Dans un exemple de réalisation, les ouvertures de guidage peuvent être uniformément réparties autour de la première portion. En variante, les ouvertures de guidage peuvent ne pas être uniformément réparties autour de la première portion. Le choix d'une telle répartition uniforme ou non uniforme des ouvertures de guidage dépend de s'il est recherché d'avoir une répartition uniforme ou non uniforme des fibres optiques dans la section de la pièce à obtenir.

Dans un exemple de réalisation, chaque fibre optique du deuxième dispositif d'alimentation peut être incorporée dans une gaine de renfort en matériau composite.

Un tel exemple de réalisation est avantageux dans la mesure où la gaine de renfort permet de rigidifier la fibre optique. Cette rigidité accrue de la fibre optique facilite davantage encore son maintien à la position voulue à l'entrée de la filière de pultrusion, et donc dans la pièce à obtenir.

Dans un exemple de réalisation, le jeu entre l'ouverture de guidage et la fibre optique qui est destinée à la traverser peut être inférieur ou égal à 2 mm.

Une telle caractéristique permet de faciliter davantage encore le maintien de la fibre optique à la position voulue à l'entrée de la filière de pultrusion, et donc dans la pièce à obtenir.

Dans un exemple de réalisation, l'installation peut en outre comprendre un troisième dispositif d'alimentation comprenant au moins une fibre conductrice de l'électricité, l'élément de positionnement pouvant en outre présenter un ajour traversant distinct de chaque ouverture de guidage, et le dispositif de traction pouvant être configuré pour tirer la fibre conductrice depuis le troisième dispositif d'alimentation au travers dudit ajour et de la filière de pultrusion.

Cet exemple de réalisation est utile pour obtenir une pièce incorporant, en plus de la ou des fibres optiques, une fibre conductrice qui permet d'acheminer un signal électrique le long de la pièce obtenue. Cet exemple de réalisation est ainsi avantageux afin d'obtenir sans réaliser d'étape supplémentaire une pièce en matériau composite davantage fonctionnalisée.

La présente invention vise également un procédé de fabrication d'une pièce en matériau composite conformément à la revendication 7.

Dans un exemple de réalisation, la fibre conductrice peut être tirée par le dispositif de traction au travers de la filière de pultrusion, la fibre conductrice pouvant traverser l'ajour de l'élément de positionnement, la pièce ainsi obtenue pouvant comprendre une âme formée par la fibre conductrice enrobée par la structure composite.

Dans un exemple de réalisation, la pièce en matériau composite obtenue peut présenter une longueur supérieure ou égale à 10 mètres, par exemple supérieure ou égale à 100 mètres. La longueur de la pièce peut par exemple être de plusieurs centaines de mètres.

Une telle pièce peut constituer un jonc de transmission d'information destiné par exemple à être utilisé dans un puits de forage de l'industrie pétrolière. La pièce peut encore être destinée à une utilisation dans la transmission d'informations sur des systèmes embarqués dans l'industrie aéronautique.

### Brève description des dessins

D'autres caractéristiques et avantages de la divulgation ressortiront de la description suivante, donnée à titre non limitatif, en référence aux dessins annexés, sur lesquels :
- la figure 1 illustre de manière schématique un exemple d'installation selon l'invention,
- les figures 2 à 5 montrent de manière plus détaillée la structure de l'exemple d'élément de positionnement mis en œuvre dans l'installation de la figure 1,
- la figure 6 illustre la section transversale de la pièce en matériau composite obtenue par mise en œuvre de l'installation de la figure 1,
- la figure 7 illustre le positionnement des fibres optiques obtenu dans une pièce en matériau composite formée par mise en œuvre d'un procédé hors invention,
- la figure 8 illustre de manière schématique et partielle une variante de réalisation dans laquelle les fibres optiques du deuxième dispositif d'alimentation sont gainées par une gaine de renfort, et
- la figure 9 illustre une variante d'élément de positionnement utilisable dans une installation selon l'invention.

### Description détaillée de modes de réalisation

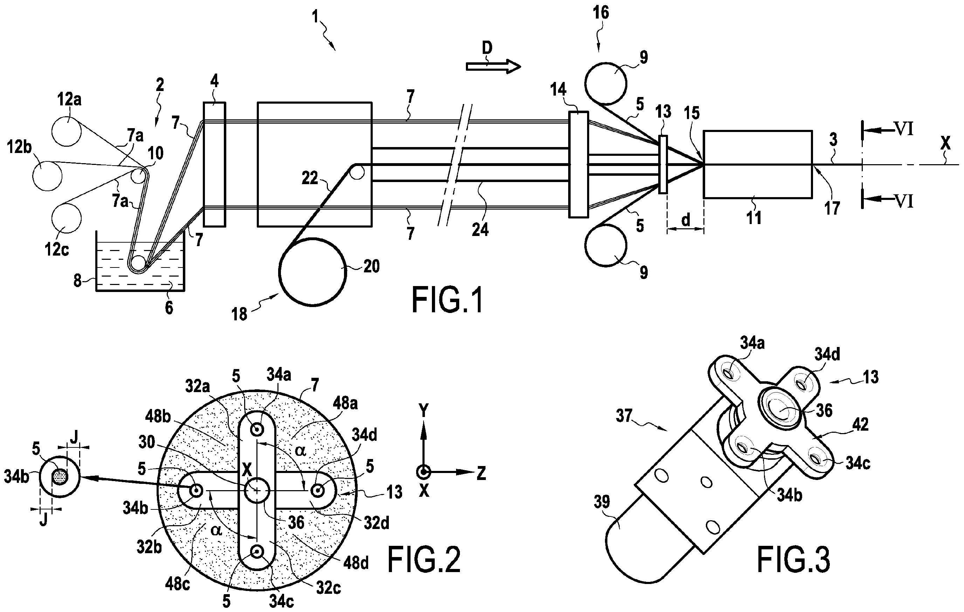

La figure 1 illustre de manière schématique un exemple d'installation 1. Cette installation 1 est utile pour fabriquer une pièce 3 en matériau composite comprenant plusieurs fibres optiques 5.

L'installation 1 comprend un premier dispositif d'alimentation 2 qui comprend une pluralité de fibres de renfort 7 imprégnées de résine ainsi qu'un dispositif de traction (non représenté) configuré pour tirer les fibres 7 au travers de l'installation 1 dans la direction illustrée par la flèche D. Le premier dispositif d'alimentation 2 comprend plusieurs bobines 12a, 12b et 12c comprenant des fibres de renfort 7a sèches (i.e. non imprégnées de résine). Lors de leur tirage par le dispositif de traction, les fibres sèches 7a passent tout d'abord par une bobine 10 permettant de réunir les fibres 7a provenant des différentes bobines 12a-12c afin de former un faisceau de fibres sèches 7a. Le premier dispositif d'alimentation 2 comprend en outre un bain 8 de résine 6 vers lequel est dirigé le faisceau de fibres sèches 7a afin d'imprégner ces dernières par la résine 6.

L'installation 1 comprend en outre, en aval du premier dispositif d'alimentation 2, un répartiteur annulaire 4. Dans la suite, les termes « amont » et « aval » sont utilisés en référence au sens de tirage des fibres dans l'installation 1 (flèche D à la figure 1). Ainsi, après traversée du bain 8, les fibres de renfort 7 sont tirées par le dispositif de traction vers le répartiteur annulaire 4. Le répartiteur annulaire 4 permet de former un faisceau annulaire de fibres de renfort 7 imprégnées par la résine 6.

Les fibres de renfort peuvent présenter un module d'Young supérieur ou égal à 70 GPa.. Les fibres de renfort peuvent par exemple être des fibres de carbone, de verre ou de basalte. La résine 6 imprégnant les fibres de renfort 7 est destinée à former la matrice de la pièce à obtenir après passage dans la filière de pultrusion comme il sera détaillé plus bas. A titre illustratif, la résine 6 peut par exemple être une résine thermodurcissable ou une résine thermoplastique. La résine 6 peut par exemple être une résine thermodurcissable époxy, une résine thermodurcissable polyuréthane, une résine thermodurcissable polyester, une résine thermoplastique polyamide ou une résine thermoplastique polyéthylène.

L'installation 1 comprend en outre, en aval du répartiteur annulaire 4, un élément 14 permettant de diriger le faisceau annulaire de fibres imprégnées 7 vers l'élément de positionnement 13 et vers l'entrée 15 de la filière de pultrusion 11. L'expression «entrée de la filière de pultrusion » est utilisée ici en référence au sens de tirage des fibres de renfort imprégnées dans l'installation 1 (flèche D). Le dispositif de traction est configuré pour tirer les fibres de renfort 7 imprégnées depuis le premier dispositif d'alimentation 2 au travers successivement de l'élément de positionnement 13 et de la filière de pultrusion 11. L'élément de positionnement 13 est présent à l'entrée 15 de la filière de pultrusion 11, en amont de cette dernière. Le rôle et quelques exemples de structures possibles pour l'élément de positionnement seront décrits dans la suite. Le dispositif de traction est configuré pour mettre sous tension les fibres de renfort 7 lors de leur tirage. La filière de pultrusion 11 a la forme de la pièce 3 à obtenir. La pièce 3 en matériau composite obtenue est destinée à sortir de la filière de pultrusion 11 au travers de la sortie 17 en étant tirée par le dispositif de traction. La sortie 17 de la filière de pultrusion 11 est distincte de l'entrée 15 de la filière de pultrusion 11. La sortie 17 est, dans l'exemple illustré, située du côté opposé à l'entrée 15.

L'installation 1 comprend, en outre, un deuxième dispositif d'alimentation 16 comprenant une ou plusieurs bobines 9 comprenant chacune une fibre optique 5. Dans l'exemple illustré, le deuxième dispositif d'alimentation 16 comprend une pluralité de bobines 9 comprenant chacune une fibre optique 5 afin d'obtenir une pièce 3 incorporant une pluralité de fibres optiques 5. Chaque fibre optique 5 peut ou non être présente dans une gaine de renfort en matériau composite. L'aspect relatif au gainage des fibres optiques sera détaillé dans la suite. Les fibres optiques 5 peuvent être identiques (i.e. présenter la même structure) ou, en variante, être différentes. Chaque fibre optique 5 portée par le deuxième dispositif d'alimentation peut être sèche (i.e. pas imprégnée de résine).

Le deuxième dispositif d'alimentation 16 est présent en amont de l'élément de positionnement 13. Le dispositif de traction est configuré pour tirer chaque fibre optique 5 depuis le deuxième dispositif d'alimentation 16 au travers successivement de l'élément de positionnement 13 et de la filière de pultrusion 11. Le dispositif de traction est configuré pour mettre sous tension chaque fibre optique 5 lors du tirage. Les fibres de renfort 7 sont tirées par le dispositif de traction de sorte à enrober chaque fibre optique 5 afin d'obtenir, après traversée de la filière de pultrusion 11, une pièce 3 incorporant chaque fibre optique 5 dans une structure en matériau composite.

L'installation 1 comprend, en outre, un troisième dispositif d'alimentation 18 comprenant une ou plusieurs fibres 22 conductrices de l'électricité. Chaque fibre conductrice 22 peut être formée d'un matériau métallique comme le cuivre. La présence de ce troisième dispositif d'alimentation 18 est optionnelle dans le cadre de l'invention. Un tel troisième dispositif d'alimentation est présent lorsqu'il est recherché de fabriquer une pièce 3 présentant une âme conductrice distincte des fibres optiques 5. Cette âme conductrice permet la transmission d'un signal électrique à l'intérieur de la pièce 3. La fabrication d'une pièce en matériau composite dépourvue d'une telle âme conductrice est aussi envisagée dans le cadre de la présente invention.

Dans l'exemple illustré à la figure 1, le troisième dispositif d'alimentation 18 comprend une bobine 20 comprenant une fibre conductrice 22 de l'électricité. La fibre conductrice 22 est différente des fibres de renfort 7 et de chaque fibre optique 5. Le dispositif de traction est configuré pour tirer la fibre conductrice 22 depuis le troisième dispositif d'alimentation 18 au travers successivement de l'élément de positionnement 13 et de la filière de pultrusion 11. Le dispositif de traction est configuré pour mettre sous tension chaque fibre conductrice 22 lors du tirage.

L'installation 1 comporte un canal tubulaire 24 situé en amont de l'élément de positionnement 13. Dans l'exemple illustré, le canal tubulaire 24 est centré sur l'axe longitudinal X de la filière de pultrusion 11. Le dispositif de traction est configuré pour tirer la fibre conductrice 22 au travers du canal 24 à l'intérieur de ce dernier. La fibre conductrice 22 traverse ensuite l'élément de positionnement 13 puis la filière de pultrusion 11 afin d'être incorporée dans la pièce 3 en matériau composite fabriquée. Les fibres de renfort 7 sont destinées à enrober la fibre conductrice 22 afin d'obtenir, après traversée de la filière de pultrusion 11, une pièce 3 incorporant une âme formée par la fibre conductrice 22 enrobée par la structure composite.

La filière de pultrusion 11 s'étend le long d'un axe longitudinal X. L'axe longitudinal X peut être un axe de symétrie de la filière 11. L'axe longitudinal X peut avoir une forme rectiligne, en ligne brisée ou courbe.

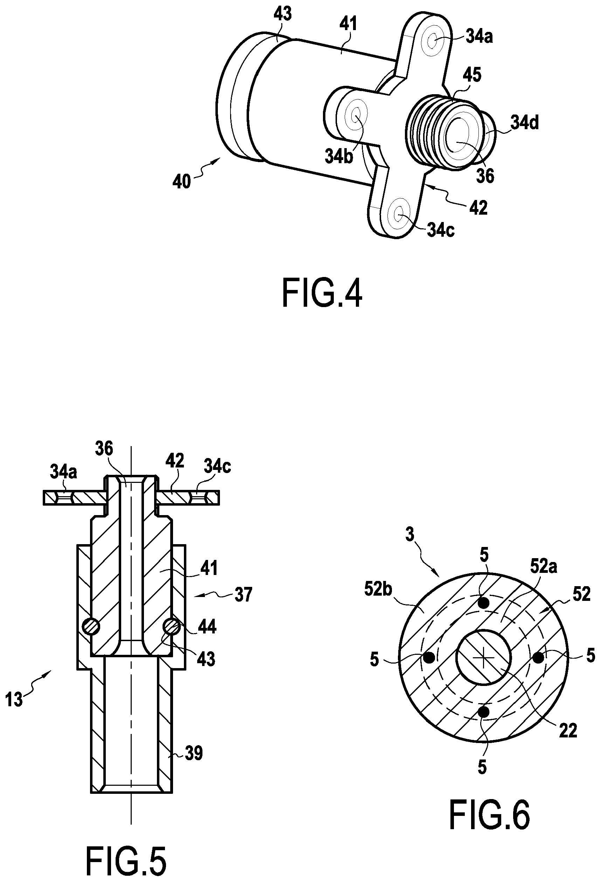

La filière de pultrusion 11 comprend, en outre, un dispositif de chauffage (non représenté). Le dispositif de chauffage est configuré pour chauffer l'intérieur de la filière 11. Le dispositif de chauffage est configuré pour réaliser la cuisson de la résine imprégnant les fibres de renfort 7 lorsque ces fibres 7 sont tirées au travers de la filière de pultrusion 11. Cette cuisson permet de former la matrice organique de la pièce 3 en matériau composite. On obtient ainsi, après cuisson, la pièce 3 qui comprend une structure composite 52 formée des fibres de renfort et d'une matrice organique (voir figures 1 et 6). Chaque fibre optique 5 est enrobée par la structure composite 52 dans la pièce 3 obtenue (voir figure 6). La matrice organique est obtenue après cuisson de la résine. Cette matrice peut être formée par réticulation ou polymérisation de la résine 6 lors de la cuisson effectuée dans la filière de pultrusion 11. A titre indicatif, le dispositif de chauffage peut être configuré pour chauffer l'intérieur de la filière de pultrusion 11 à une température supérieure ou égale à 200°C afin de réaliser la cuisson de la résine.

Comme évoqué plus haut, l'installation 1 comprend un élément de positionnement 13 présent à l'entrée 15 de la filière 11 de pultrusion et à l'extérieur de celle-ci. Il est avantageux que l'élément de positionnement 13 soit le plus proche possible de l'entrée 15. Avantageusement, la distance d séparant l'élément de positionnement 13 de l'entrée 15 de la filière 11 peut être inférieure ou égale à 5 cm. La distance d est mesurée selon l'axe longitudinal X de la filière de pultrusion 11. L'élément de positionnement 13 est, dans l'exemple illustré, positionné en regard (i.e. en face) de l'entrée 15. On ne sort toutefois pas du cadre de l'invention lorsque l'élément de positionnement n'est pas situé parfaitement en face de l'entrée de la filière de pultrusion mais est légèrement décalé par rapport à cette dernière.

La structure d'un exemple d'élément de positionnement 13 utilisable dans l'installation 1 va, à présent, être décrite en lien avec les figures 2 à 5.

L'élément de positionnement 13 comprend une première portion 30 et une pluralité de deuxièmes portions (ici quatre deuxièmes portions) 32a, 32b, 32c et 32d qui s'étendent depuis la première portion 30. Bien entendu, l'élément de positionnement peut comporter un nombre de deuxièmes portions différent de quatre. La première portion 30 est centrée sur l'axe longitudinal X dans l'exemple illustré. La première portion 30 peut constituer une portion centrale de l'élément de positionnement 13. Les deuxièmes portions 32a-32d s'étendent transversalement par rapport à l'axe longitudinal X de la filière de pultrusion 11. Dans l'exemple illustré, les deuxièmes portions 32a-32d s'étendent perpendiculairement à l'axe longitudinal X.

Les deuxièmes portions 32a-32d présentent, dans l'exemple illustré, une forme allongée, par exemple une forme de branche ou de bras. L'exemple d'élément de positionnement 13 illustré présente une forme de croix. Dans des variantes non illustrées, l'élément de positionnement pourrait présenter une forme différente, en étant par exemple muni par exemple d'une ou plusieurs deuxièmes portions de forme circulaire ou semi-circulaire.

Chacune des deuxièmes portions 32a-32d présente une ouverture de guidage traversante 34a, 34b, 34c et 34d. Les ouvertures de guidage 34a-34d ont dans l'exemple illustré une forme circulaire mais on ne sort pas du cadre de l'invention lorsque les ouvertures de guidage ont une autre forme comme une forme polygonale, par exemple carrée ou triangulaire, ou encore une forme ovale. Chaque ouverture de guidage 34a-34d est destinée à être traversée par une fibre optique 5 distincte tirée par le dispositif de traction. Le dispositif de traction est ainsi configuré pour tirer chaque fibre optique 5 depuis le deuxième dispositif d'alimentation 16 au travers successivement d'une ouverture de guidage distincte 34a-34d et de la filière de pultrusion 11. Chaque ouverture de guidage 34a-34d présente, bien entendu, une taille supérieure au diamètre de la fibre optique 5 qui est destinée à la traverser. Par « taille de l'ouverture de guidage », il faut comprendre la plus grande dimension de celle-ci. Dans le cas illustré où les ouvertures de guidage sont circulaires, la taille des ouvertures de guidage correspond au diamètre de ces dernières. Par « diamètre de la fibre optique », il faut comprendre la plus grande dimension transversale de celle-ci. Les ouvertures de guidage 34a-34d peuvent en outre être munies d'un dépôt d'un matériau configuré pour éviter d'adhérer ou d'accrocher aux fibres optiques 5, et ce afin de faciliter le mouvement des fibres optiques au travers des ouvertures 34a-34d.

Dans l'exemple illustré, chacune des ouvertures de guidage 34a-34d est configurée pour limiter le déplacement de la fibre optique 5 dans les deux directions Y et Z perpendiculaires à l'axe longitudinal X de la filière 11. Les ouvertures de guidage 34a-34d présentent une forme fermée. Ainsi, les ouvertures de guidage 34a-34d permettent de limiter le déplacement de chaque fibre optique 5 dans toute direction transversale à l'axe longitudinal X de la filière 11. On ne sort toutefois pas du cadre de l'invention lorsque les ouvertures de guidage présentent une forme ouverte, comme une forme en « V » ou en « U ». Auquel cas, ces ouvertures de guidage pourraient être configurées pour limiter le déplacement de la fibre optique dans seulement une direction perpendiculaire à l'axe longitudinal de la filière.

Il peut être avantageux que le jeu j entre chaque ouverture de guidage 34a-34d et la fibre optique 5 destinée à traverser cette ouverture de guidage soit inférieur ou égal à 2 mm. En d'autres termes, cela signifie que, la différence [taille de l'ouverture de guidage]/2 - [rayon de la fibre optique destinée à traverser ladite ouverture de guidage] est positive et inférieure ou égale à 2 mm, voire à 1 mm.

Les ouvertures de guidage 34a-34d peuvent, comme illustré, être uniformément réparties autour de la première portion 30. En d'autres termes, l'écart angulaire α séparant deux ouvertures de guidage adjacentes est constant lorsque l'on se déplace autour de la première portion 30. Dans l'exemple illustré où il y a quatre ouvertures de guidage 34a-34d, α = 360°/4 = 90°. La première portion 30 étant, dans l'exemple illustré, centrée sur l'axe longitudinal X de la filière 11, il s'ensuit que les ouvertures de guidage 34a-34d sont aussi uniformément réparties autour de l'axe longitudinal X. On pourrait, dans une variante non illustrée et comme évoqué plus haut, avoir une répartition non uniforme des ouvertures de guidage autour de la première portion/de l'axe longitudinal de la filière.

L'élément de positionnement 13 illustré présente, en outre, un ajour traversant 36. L'ajour traversant 36 est distinct de chacune des ouvertures de guidage 34a-34d. L'ajour 36 est, dans l'exemple illustré, présent sur la première portion 30 mais on ne sortirait pas du cadre de l'invention si cet ajour était présent sur une des deuxièmes portions 32a-32d. Dans l'exemple illustré, l'ajour 36 est centré sur l'axe longitudinal X mais on ne sort pas du cadre de l'invention lorsque cet ajour 36 est décalé de cet axe X. La taille (i.e. plus grande dimension) de l'ajour traversant 36 est, dans l'exemple illustré, supérieure à la taille de chaque ouverture de guidage 34a-34d. Dans des variantes non illustrées, la taille de l'ajour traversant est inférieure ou égale à la taille de chaque ouverture de guidage. L'ajour traversant 36 est destiné à être traversé par la fibre conductrice de l'électricité 22. Le dispositif de traction est configuré pour tirer la fibre conductrice 22 depuis le troisième dispositif d'alimentation 18 au travers successivement dudit ajour 36 et de la filière de pultrusion 11. L'ajour 36 peut avantageusement constituer un élément de guidage permettant de maintenir le positionnement de la fibre conductrice 22 dans la section de la pièce 3. Le jeu entre l'ajour traversant 36 et la fibre conductrice 22 peut ainsi par exemple être inférieur ou égal à 2 mm. L'ajour 36 peut avoir une forme circulaire comme illustré mais peut encore être de forme ovale ou polygonale. Comme évoqué plus haut, la présence de la fibre conductrice 22 est optionnelle et, dans le cas où la pièce est dépourvue d'une telle fibre conductrice, l'élément de positionnement peut ne pas présenter l'ajour 36.

Le positionnement relatif des fibres optiques 5 et de la fibre conductrice 22 imposé par l'élément de positionnement 13 est conservé dans la pièce 3 obtenue. C'est-à-dire que l'utilisation de l'élément de positionnement 13 illustré aboutira à une pièce 3 présentant en section transversale une fibre conductrice 22 centrale et des fibres optiques 5 disposées uniformément autour de cette fibre conductrice 22.

Chaque ouverture de guidage 34a-34d et l'ajour 36 sont maintenus dans une position prédéterminée par rapport à l'entrée 15 de la filière 11. Cela permet avantageusement de conserver le positionnement souhaité pour les fibres optiques 5 et la fibre conductrice 22 dans la section de la pièce 3.

L'élément de positionnement 13 comprend un corps 37 présentant une portion de fixation 39. La portion de fixation 39 est dans l'exemple illustré située du côté opposé à la portion de guidage 42 qui porte les ouvertures de guidage 34a-34d. Dans l'exemple illustré, la portion de fixation 39 est munie d'un filetage (non représenté). Lors du montage de l'élément de positionnement 13 dans l'installation, la portion de fixation 39 filetée est vissée dans le canal tubulaire 24 et sur l'élément 14. Le canal 24 et l'élément 14 étant chacun dans une position prédéterminée par rapport à l'entrée 15 de la filière de pultrusion 11, il s'ensuit que, du fait de la fixation de l'élément de positionnement 13 à ces éléments, chaque ouverture de guidage 34a-34d et l'ajour 36 sont maintenus dans une position prédéterminée et fixe par rapport à l'entrée 15. En particulier, le canal tubulaire 24 et l'élément 14 peuvent chacun être centrés sur l'axe longitudinal X de la filière 11, comme illustré. Ainsi, dans ce cas, l'élément de positionnement 13 une fois fixé sur ces éléments sera lui aussi centré sur l'axe longitudinal X de la filière 11. L'élément de positionnement 13 ainsi que chaque ouverture de guidage 34a-34d sont maintenus à une position fixe durant la fabrication de la pièce 3 par mise en œuvre de l'installation 1.

Dans l'exemple illustré, l'élément de positionnement 13 est formé de plusieurs parties distinctes. Comme illustré à la figure 4, l'élément de positionnement 13 comprend, d'une part, un noyau 40 muni d'une gorge annulaire 43 reliée par un tronçon 41 à un col fileté 45. La portion de guidage 42 est vissée sur le col fileté 45. Pour former l'élément de positionnement 13 illustré, le noyau 40 est inséré dans le corps creux 37 de sorte à faire coopérer la gorge annulaire 43 avec un élément de fixation élastique 44 présent à l'intérieur du corps creux 37. Dans l'exemple illustré, l'élément de fixation 44 est un ressort annulaire, d'autres variantes comme des éléments de blocage à bille étant envisageables.

En se référant de nouveau à la figure 2, il est illustré que les fibres de renfort 7 sont tirées par le dispositif de traction depuis le premier dispositif d'alimentation et passent autour de l'élément de positionnement 13. Les fibres de renfort 7 imprégnées passent autour de l'élément de positionnement 13 avant leur entrée dans la filière de pultrusion 11. Dans l'exemple illustré, le dispositif de traction est configuré pour tirer les fibres de renfort 7 tout autour de l'élément de positionnement 13 (i.e. à 360° autour de ce dernier). En outre, le dispositif de traction est, dans l'exemple illustré, configuré pour tirer les fibres 7 en les faisant passer dans tous les passages 48a-48d ménagés entre deux deuxièmes portions 32a-32d adjacentes. Ainsi, le dispositif de traction est configuré pour tirer les fibres de renfort 7 en les faisant passer de chaque côté de chacune des deuxièmes portions 32a-32d. Chaque deuxième portion 32a-32d est située entre des fibres de renfort 7 passant dans deux passages adjacents 48a-48d durant la fabrication de la pièce 3.

Lors de la mise en œuvre de l'installation 1, la pièce 3 est formée par pultrusion par tirage de chacune des fibres optiques 5 et des fibres de renfort 7 imprégnées par le dispositif de traction au travers de la filière de pultrusion 11. Le dispositif de traction entraîne la pièce composite 3 obtenue en sortie 17 de la filière 11 qui elle-même entraîne les fibres de renfort imprégnées 7, chaque fibre optique 5 et l'âme conductrice 22. Chaque fibre optique 5 traverse une ouverture de guidage 34a-34d distincte avant son entrée dans la filière de pultrusion 11, comme détaillé plus haut. Les fibres imprégnées 7 passent autour de l'élément de positionnement 13 et de part et d'autre de chacune des deuxièmes portions 32a-32d avant leur entrée dans la filière de pultrusion 11. La fibre conductrice 22 traverse quant à elle l'ajour 36 avant son entrée dans la filière de pultrusion 11.

Dans la filière de pultrusion 11, les fibres imprégnées 7 viennent enrober chaque fibre optique 5 et la fibre conductrice 22. La résine imprégnant ces fibres est quant à elle chauffée afin de former une matrice organique à l'état solide. On obtient ainsi la pièce 3 qui incorpore les fibres optiques 5 et la fibre conductrice 22 encapsulées dans une structure composite formée à partir des fibres 7 est ainsi obtenue.

La figure 6 illustre la section transversale de la pièce 3 en matériau composite obtenue par mise en œuvre de l'installation 1. La section transversale de la pièce 3 est prise perpendiculairement à l'axe longitudinal de celle-ci. Comme mentionné plus haut, la pièce 3 comprend une pluralité de fibres optiques 5 enrobées dans la structure composite 52 formée des fibres de renfort et de la matrice organique. Chaque fibre optique 5 est enrobée par la structure composite 52. La pièce 3 obtenue comprend en outre une âme formée par la fibre conductrice 22 enrobée par la structure composite 52. Plus précisément dans l'exemple illustré, la structure composite 52 définit une première portion radialement interne 52a et une deuxième portion radialement externe 52b. Chaque fibre optique 5 est située entre la première 52a et la deuxième 52b portion. La fibre conductrice 22 est, quant à elle, enrobée par la première portion radialement interne 52a (et par la deuxième portion radialement externe 52b).

L'installation 1 est en outre munie d'un dispositif de découpe (non représenté) à la sortie de la filière 11 permettant de couper la pièce 3 une fois que la longueur souhaitée est atteinte pour celle-ci. La pièce 3 obtenue présente une forme allongée. La pièce obtenue 3 présente une forme de câble. La pièce 3 obtenue peut constituer un profilé présentant une longueur supérieure ou égale à 10 mètres, par exemple.

Dans le cas où la pièce obtenue ne présente pas d'âme conductrice 22, la zone où l'âme conductrice est présente peut être remplie par la structure composite comprenant les fibres de renfort et la matrice organique. Dans une variante non illustrée, on pourrait former une pièce en matériau composite comprenant une unique fibre optique centrale en utilisant un élément de positionnement comprenant uniquement la première portion 30 et pas de deuxième portion 32a-32d. Auquel cas, la fibre optique passerait au niveau d'une ouverture de guidage présente sur cette première portion 30 et les fibres de renfort 7 passeraient autour de cette première portion 30 afin de former une structure composite tout autour de la fibre optique.

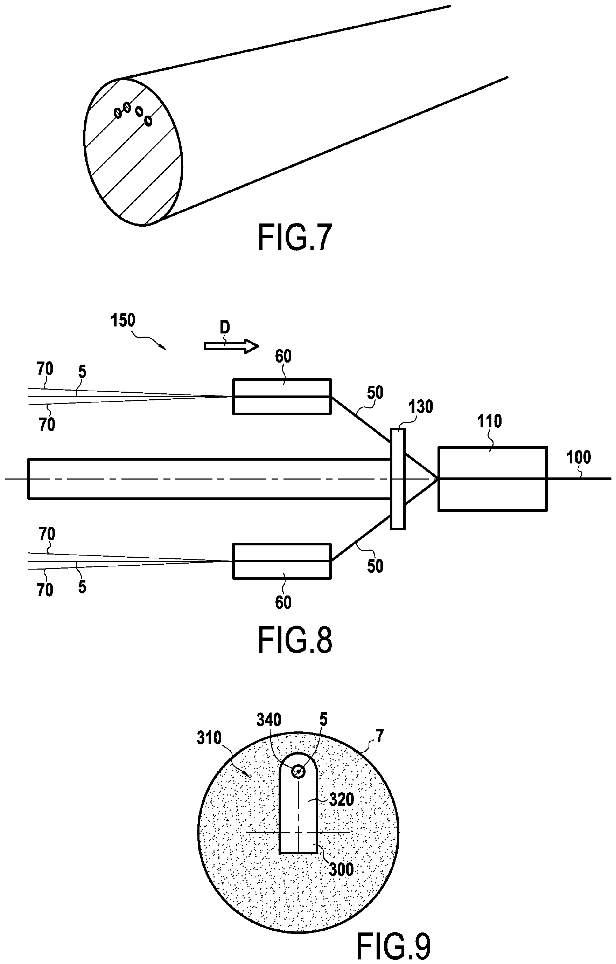

A titre comparatif, la figure 7 illustre une pièce fabriquée par une installation du type de celle illustrée à la figure 1 dans laquelle l'élément de positionnement 13 a été omis. On constate le fort décalage dans le positionnement des fibres optiques dans la structure ainsi obtenue.

On a représenté à la figure 8 une variante d'installation 150 selon l'invention dans laquelle les fibres optiques 5 sont gainées par une gaine de renfort avant d'entrer dans la filière de pultrusion 110. Par souci de clarté, les fibres de carbone imprégnées permettant de former la structure composite de la pièce 100 n'ont pas été représentées sur cette figure, étant entendu que de telles fibres sont présentes d'une manière similaire à celle décrite plus haut.

L'installation 150 illustrée à la figure 8 permet de former en ligne une gaine de renfort en matériau composite autour des fibres optiques 5 avant leur entrée dans la filière de pultrusion principale 110. On pourrait en variante ne pas réaliser ce gainage en ligne mais utiliser des fibres optiques déjà gainées par une gaine de renfort au niveau des bobines 9 de l'installation 1 de la figure 1. La réalisation d'un gainage en ligne est toutefois avantageuse afin d'améliorer l'efficacité du procédé de fabrication.

Dans l'exemple illustré, le gainage des fibres optiques 5 est effectué par pultrusion. Ainsi, l'installation 150 comprend en amont de l'élément de positionnement 130 et de la filière de pultrusion principale 110, une pluralité de filières de pultrusion secondaires 60. On peut avoir autant de filières de pultrusion secondaires 60 que de fibres optiques 5 à gainer et à incorporer dans la pièce 100. Les fibres optiques 5 sont gainées individuellement. Une seule fibre optique 5 passe dans chacune des filières de pultrusion secondaires 60.

Le dispositif de traction tire les fibres optiques 5 ainsi que des fibres de renfort imprégnées de résine 70 au travers des filières de pultrusion secondaires 60. Les fibres de renfort 70 forment après cuisson de la résine dans les filières 60 la gaine de renfort en matériau composite enrobant chacune des fibres optiques 5. Les fibres optiques ainsi gainées 50 traversent ensuite les ouvertures de guidage présentes sur l'élément de positionnement 130 d'une manière similaire à ce qui a été décrit plus haut. Les fibres optiques 50 traversent ensuite la filière de pultrusion principale 110 afin de former la pièce en matériau composite 100. La mise en œuvre de telles fibres optiques gainées 50, présentant une rigidité accrue, est avantageuse afin de faciliter davantage encore le maintien des fibres optiques à la position souhaitée dans la pièce obtenue.

La figure 9 illustre un exemple d'élément de positionnement 310 comprenant une unique deuxième portion 320 s'étendant depuis une première portion 300. La deuxième portion 320 porte une ouverture de guidage 340 destinée à être traversée par une fibre optique 5 de la même manière que décrit plus haut. Les fibres de carbone imprégnées 7 défilent quant à elle autour de l'élément de positionnement et de chaque côté de la deuxième portion 320. Dans cet exemple de réalisation, la deuxième portion 320 s'étend transversalement, par exemple perpendiculairement, par rapport à l'axe longitudinal de la filière de pultrusion. Ce qui a été décrit plus haut relativement à la géométrie possible pour la deuxième portion et l'ouverture de guidage s'applique à cet exemple de réalisation où l'élément de positionnement 310 comprend une unique deuxième portion 320. Une telle variante d'élément de positionnement 310 est adaptée à la formation d'une pièce en matériau composite comprenant une unique fibre optique.

## Revendications

1. Installation (1 ; 150) pour la fabrication d'une pièce (3 ; 100) en matériau composite incorporant au moins une fibre optique (5 ; 50), ladite installation comprenant au moins :
- un premier dispositif d'alimentation (2) comprenant une pluralité de fibres de renfort (7) imprégnées de résine,
- un deuxième dispositif d'alimentation (16) comprenant au moins une fibre optique (5 ; 50), distinct du premier dispositif d'alimentation (2),
- une filière de pultrusion (11 ; 110) ayant la forme de la pièce (3 ; 100) en matériau composite à obtenir,
- un dispositif de traction configuré pour tirer les fibres de renfort (7) et la fibre optique (5 ; 50) depuis les dispositifs d'alimentation (2 ; 16) au travers de la filière de pultrusion (11 ; 110), et
- un élément de positionnement (13 ; 130 ; 310) présent à l'entrée (15) de la filière de pultrusion et présentant au moins une ouverture de guidage (34a-34d ; 340) maintenue dans une position prédéterminée par rapport à l'entrée (15) de la filière,
le dispositif de traction étant configuré pour tirer la fibre optique (5 ; 50) depuis le deuxième dispositif d'alimentation (16) au travers de l'ouverture de guidage (34a-34d ; 340) et de la filière de pultrusion (11 ; 110), et pour tirer les fibres de renfort (7) depuis le premier dispositif d'alimentation (2) au travers de la filière de pultrusion (11 ; 110) en les faisant passer autour dudit élément de positionnement (13 ; 130 ; 310), l'élément de positionnement (13 ; 310) comprenant une première portion (30 ; 300) et au moins une deuxième portion (32a-32d ; 320) s'étendant depuis la première portion, l'ouverture de guidage (34a-34d ; 340) étant présente sur la deuxième portion et le dispositif de traction étant en outre configuré pour tirer les fibres de renfort (7) en les faisant passer de chaque côté de ladite deuxième portion (32a-32d ; 320).

2. Installation (1) selon la revendication 1, dans laquelle la filière de pultrusion (11) s'étend le long d'un axe longitudinal (X), le deuxième dispositif d'alimentation (16) comprenant une pluralité de fibres optiques (5), et l'élément de positionnement (13) comprenant une pluralité de deuxièmes portions (32a-32d) s'étendant chacune depuis la première portion (30) transversalement par rapport à l'axe longitudinal (X) de la filière, chacune des deuxièmes portions (32a-32d) présentant au moins une ouverture de guidage (34a-34d), le dispositif de traction étant configuré pour tirer chacune des fibres optiques (5) depuis le deuxième dispositif d'alimentation au travers d'une ouverture de guidage distincte (34a-34d) et de la filière de pultrusion (11), le dispositif de traction étant en outre configuré pour tirer les fibres de renfort (7) en les faisant passer de chaque côté de chacune desdites deuxième portions (32a-32d).

3. Installation (1) selon la revendication 2, dans laquelle les ouvertures de guidage (34a-34d) sont uniformément réparties autour de la première portion (30).

4. Installation (150) selon l'une quelconque des revendications 1 à 3, dans laquelle chaque fibre optique (50) du deuxième dispositif d'alimentation est incorporée dans une gaine de renfort en matériau composite.

5. Installation (1) selon l'une quelconque des revendications 1 à 4, comprenant en outre un troisième dispositif d'alimentation (18) comprenant au moins une fibre conductrice (22) de l'électricité, l'élément de positionnement (13) présentant en outre un ajour traversant (36) distinct de chaque ouverture de guidage (34a-34d), et le dispositif de traction étant configuré pour tirer la fibre conductrice (22) depuis le troisième dispositif d'alimentation (18) au travers dudit ajour (36) et de la filière de pultrusion (11).

6. Installation (1) selon l'une quelconque des revendications 1 à 5, dans laquelle le jeu (j) entre l'ouverture de guidage (34a-34d) et la fibre optique (5) qui est destinée à la traverser est inférieur ou égal à 2 mm.

7. Procédé de fabrication d'une pièce (3 ; 100) en matériau composite incorporant au moins une fibre optique (5 ; 50), le procédé mettant en œuvre une installation (1 ; 150) selon l'une quelconque des revendications 1 à 6 et comprenant :
- la formation de la pièce (3 ; 100) par pultrusion par tirage de ladite au moins une fibre optique (5 ; 50) et des fibres de renfort imprégnées (7) par le dispositif de traction au travers de la filière de pultrusion (11 ; 110) et par cuisson de la résine imprégnant les fibres (7) de renfort, la fibre optique (5 ; 50) traversant l'ouverture de guidage (34a-34d ; 340) et les fibres de renfort (7) imprégnées passant autour de l'élément de positionnement (13 ; 130 ; 310), la pièce (3 ; 100) ainsi obtenue comprenant la fibre optique (5 ; 50) enrobée par une structure composite (52) formée des fibres de renfort et d'une matrice organique obtenue après cuisson de la résine,
dans lequel une installation (1) selon l'une quelconque des revendications 2 et 3 à 6 rattachées à la revendication 2 est mise en œuvre, et dans lequel chacune des fibres optiques (5) est tirée par le dispositif de traction au travers d'une ouverture de guidage (34a-34d) distincte et de la filière de pultrusion (11), et dans lequel les fibres de renfort (7) imprégnées passent en outre de chaque côté de chacune desdites deuxièmes portions (34a-34d), la pièce (3) ainsi obtenue comprenant les fibres optiques (5) enrobées par la structure composite (52).

8. Procédé selon la revendication 7, dans lequel une installation (1) selon l'une quelconque des revendications 5 ou 6 rattachée à la revendication 5 est mise en œuvre, et dans lequel la fibre conductrice (22) est tirée par le dispositif de traction au travers de la filière de pultrusion (11), la fibre conductrice (22) traversant l'ajour (36) de l'élément de positionnement (13), la pièce (3) ainsi obtenue comprenant une âme formée par la fibre conductrice (22) enrobée par la structure composite (52).

9. Procédé selon l'une quelconque des revendications 7 à 8, dans lequel la pièce (3 ; 100) en matériau composite obtenue présente une longueur supérieure ou égale à 10 mètres.

## Patentansprüche

1. Anlage (1; 150) zur Herstellung eines Teils (3; 100) aus Verbundwerkstoff, der mindestens eine optische Faser (5; 50) umschließt, wobei die Anlage mindestens umfasst:
- eine erste Zuführvorrichtung (2), die eine Mehrzahl von harzimprägnierten Verstärkungsfasern (7) umfasst,
- eine zweite Zuführvorrichtung (16), die mindestens eine optische Faser (5; 50) umfasst und von der ersten Zuführvorrichtung (2) verschieden ist,
- eine Strangziehdüse (11; 110) mit der Form des zu erhaltenden Teils (3; 100) aus Verbundwerkstoff,
- eine Zugvorrichtung, die dazu ausgestaltet ist, die Verstärkungsfasern (7) und die optische Faser (5; 50) von den Zuführvorrichtungen (2; 16) aus durch die Strangziehdüse (11; 110) hindurch zu ziehen, und
- ein Positionierungselement (13; 130; 310), das sich am Eingang (15) der Strangziehdüse befindet und mindestens eine Führungsöffnung (34a-34d; 340) aufweist, die in Bezug auf den Eingang (15) der Düse in einer vorbestimmten Position gehalten wird,
wobei die Zugvorrichtung dazu ausgestaltet ist, die optische Faser (5; 50) von der zweiten Zuführvorrichtung (16) aus durch die Führungsöffnung (34a-34d; 340) und die Strangziehdüse (11; 110) hindurch zu ziehen und die Verstärkungsfasern (7) von der ersten Zuführvorrichtung (2) aus um das Positionierungselement (13; 130; 310) herum durch die Strangziehdüse (11; 110) hindurch zu ziehen, wobei das Positionierungselement (13; 310) einen ersten Abschnitt (30; 300) und mindestens einen zweiten Abschnitt (32a-32d; 320), der sich vom ersten Abschnitt aus erstreckt, umfasst, wobei sich die Führungsöffnung (34a-34d; 340) an dem zweiten Abschnitt befindet und die Zugvorrichtung ferner dazu ausgestaltet ist, die Verstärkungsfasern (7) an jeder Seite des zweiten Abschnitts (32a-32d; 320) entlang zu ziehen.

2. Anlage (1) nach Anspruch 1, bei der sich die Strangziehdüse (11) entlang einer Längsachse (X) erstreckt, wobei die zweite Zuführvorrichtung (16) eine Mehrzahl von optischen Fasern (5) umfasst und das Positionierungselement (13) eine Mehrzahl von zweiten Abschnitten (32a-32d) umfasst, die sich jeweils vom ersten Abschnitt (30) aus quer zur Längsachse (X) der Düse erstrecken, wobei jeder der zweiten Abschnitte (32a-32d) mindestens eine Führungsöffnung (34a-34d) aufweist, wobei die Zugvorrichtung dazu ausgestaltet ist, jede der optischen Fasern (5) von der zweiten Zuführvorrichtung aus durch eine andere Führungsöffnung (34a-34d) und die Strangziehdüse (11) hindurch zu ziehen, wobei die Zugvorrichtung ferner dazu ausgestaltet ist, die Verstärkungsfasern (7) an jeder Seite der zweiten Abschnitte (32a-32d) entlang zu ziehen.

3. Anlage (1) nach Anspruch 2, bei der die Führungsöffnungen (34a-34d) gleichmäßig um den ersten Abschnitt (30) herum verteilt sind.

4. Anlage (150) nach einem der Ansprüche 1 bis 3, bei der jede optische Faser (50) der zweiten Zuführvorrichtung von einem Verstärkungsmantel aus Verbundwerkstoff umschlossen ist.

5. Anlage (1) nach einem der Ansprüche 1 bis 4, die ferner eine dritte Zuführvorrichtung (18) umfasst, die mindestens eine elektrisch leitfähige Faser (22) umfasst, wobei das Positionierungselement (13) ferner eine Durchgangsöffnung (36) aufweist, die von jeder Führungsöffnung (34a-34d) verschieden ist, und die Zugvorrichtung dazu ausgestaltet ist, die leitfähige Faser (22) von der dritten Zuführvorrichtung (18) aus durch die Öffnung (36) und die Strangziehdüse (11) hindurch zu ziehen.

6. Anlage (1) nach einem der Ansprüche 1 bis 5, bei der das Spiel (j) zwischen der Führungsöffnung (34a-34d) und der optischen Faser (5), die dazu bestimmt ist, sie zu durchlaufen, 2 mm oder weniger beträgt.

7. Verfahren zur Herstellung eines Teils (3; 100) aus Verbundwerkstoff, der mindestens eine optische Faser (5; 50) umschließt, wobei das Verfahren eine Anlage (1; 150) nach einem der Ansprüche 1 bis 6 einsetzt und Folgendes umfasst:
- das Bilden des Teils (3; 100) durch Strangziehen der mindestens einen optischen Faser (5; 50) und der imprägnierten Verstärkungsfasern (7) mittels der Zugvorrichtung durch die Strangziehdüse (11; 110) hindurch und durch Aushärten des die Verstärkungsfasern (7) imprägnierenden Harzes, wobei die optische Faser (5; 50) die Führungsöffnung (34a-34d; 340) durchläuft und die Verstärkungsfasern (7) um das Positionierungselement (13; 130; 310) herum verlaufen, wobei das so erhaltene Teil (3; 100) die optische Faser (5; 50) umfasst, die von einer Verbundstruktur (52) umhüllt ist, die aus Verstärkungsfasern und einer organischen Matrix gebildet wird, die nach dem Aushärten des Harzes erhalten wird, bei dem eine Anlage (1) nach einem der Ansprüche 2 und 3 bis 6 in Verbindung mit Anspruch 2 eingesetzt wird und bei dem jede der optischen Fasern (5) mittels der Zugvorrichtung durch eine andere Führungsöffnung (34a-34d) und die Strangziehdüse (11) hindurch gezogen wird und bei dem die imprägnierten Verstärkungsfasern (7) ferner entlang jeder Seite jedes der zweiten Abschnitte (34a-34d) verlaufen, wobei das so erhaltene Teil (3) die von der Verbundstruktur (52) umhüllten optischen Fasern (5) umfasst.

8. Verfahren nach Anspruch 7, bei dem eine Anlage (1) nach einem der Ansprüche 5 oder 6 in Verbindung mit Anspruch 5 eingesetzt wird und bei dem die leitfähige Faser (22) mittels der Zugvorrichtung durch die Strangziehdüse (11) hindurch gezogen wird, wobei die leitfähige Faser (22) die Öffnung (36) des Positionierungselements (13) durchläuft, wobei das so erhaltene Teil (3) eine Seele umfasst, die durch die von der Verbundstruktur (52) umhüllte leitfähige Faser (22) gebildet wird.

9. Verfahren nach einem der Ansprüche 7 bis 8, bei dem das erhaltene Teil (3; 100) aus Verbundwerkstoff eine Länge von 10 Metern oder mehr aufweist.

## Claims

1. Apparatus (1; 150) for the manufacture of a composite material part (3; 100) incorporating at least one optical fibre (5; 50), said apparatus comprising at least:
- a first feed device (2) comprising a plurality of resin-impregnated reinforcing fibres (7),
- a second feed device (16) comprising at least one optical fibre (5; 50), different from the first feed device (2),
- a pultrusion die (11; 110) having the shape of the composite material part (3; 100) to be obtained,
- a pulling device configured to draw the reinforcing fibres (7) and the optical fibre (5; 50) from the feed devices (2; 16) through the pultrusion die (11; 110), and
- a positioning element (13; 130; 310) present at the inlet (15) of the pultrusion die and having at least one guide opening (34a-34d; 340) held in a predetermined position relative to the inlet (15) of the die,
the pulling device being configured to draw the optical fibre (5; 50) from the second feed device (16) through the guide opening (34a-34d; 340) and the pultrusion die (11; 110), and to draw the reinforcing fibres (7) from the first feed device (2) through the pultrusion die (11; 110) while making them pass around said positioning element (13; 130; 310), the positioning element (13; 310) comprising a first portion (30; 300) and at least one second portion (32a-32d; 320) extending from the first portion, the guide opening (34a-34d; 340) being present on the second portion and the pulling device being further configured to draw the reinforcing fibres (7) while making them pass on each side of said second portion (32a-32d; 320).

2. Apparatus (1) according to Claim 1, in which the pultrusion die (11) extends along a longitudinal axis (X), the second feed device (16) comprising a plurality of optical fibres (5), and the positioning element (13) comprising a plurality of second portions (32a-32d) each extending from the first portion (30) transversally with respect to the longitudinal axis (X) of the die, each of the second portions (32a-32d) having at least one guide opening (34a-34d), the pulling device being configured to draw each of the optical fibres (5) from the second feed device through a different guide opening (34a-34d) and the pultrusion die (11), the pulling device being further configured to draw the reinforcing fibres (7) while making them pass on each side of each of said second portions (32a-32d).

3. Apparatus (1) according to Claim 2, in which the guide openings (34a-34d) are uniformly distributed around the first portion (30).

4. Apparatus (150) according to any one of Claims 1 to 3, in which each optical fibre (50) of the second feed device is incorporated into a reinforcing sheath made of composite material.

5. Apparatus (1) according to any one of Claims 1 to 4, further comprising a third feed device (18) comprising at least one electrically conductive fibre (22), the positioning element (13) further having a through-aperture (36) different from each guide opening (34a-34d), and the pulling device being configured to draw the conductive fibre (22) from the third feed device (18) through said aperture (36) and the pultrusion die (11).

6. Apparatus (1) according to any one of Claims 1 to 5, in which the gap (j) between the guide opening (34a-34d) and the optical fibre (5) which is intended to pass through it is less than or equal to 2 mm.

7. Process for manufacturing a composite material part (3; 100) incorporating at least one optical fibre (5; 50), the process using an apparatus (1; 150) according to any one of Claims 1 to 6 and comprising:
- the formation of the part (3; 100) by pultrusion by drawing said at least one optical fibre (5; 50) and impregnated reinforcing fibres (7) via the pulling device through the pultrusion die (11; 110) and by curing the resin impregnating the reinforcing fibres (7), the optical fibre (5; 50) passing through the guide opening (34a-34d; 340) and the impregnated reinforcing fibres (7) passing around the positioning element (13; 130; 310), the part (3; 100) thus obtained comprising the optical fibre (5; 50) coated by a composite structure (52) formed of the reinforcing fibres and of an organic matrix obtained after curing the resin, in which an apparatus (1) according to any one of Claims 2 and 3 to 6 linked to Claim 2 is used, and in which each of the optical fibres (5) is drawn by the pulling device through a different guide opening (34a-34d) and the pultrusion die (11), and in which the impregnated reinforcing fibres (7) further pass on each side of each of said second portions (34a-34d), the part (3) thus obtained comprising the optical fibres (5) coated by the composite structure (52) .

8. Process according to Claim 7, in which an apparatus (1) according to either one of Claims 5 and 6 linked to Claim 5 is used, and in which the conductive fibre (22) is drawn by the pulling device through the pultrusion die (11), the conductive fibre (22) passing through the aperture (36) of the positioning element (13), the part (3) thus obtained comprising a core formed by the conductive fibre (22) coated by the composite structure (52) .

9. Process according to either one of Claims 7 to 8, in which the composite material part (3; 100) obtained has a length greater than or equal to 10 metres.
